# EUROPÄISCHE PATENTANMELDUNG

(11) **EP 1 452 464 A1**
(43) Veröffentlichungstag der Anmeldung: **01.09.2004**
(21) Anmeldenummer: 04090062.3
(22) Anmeldetag: 23.02.2004
(51) Int. Cl.: B65G 17/00, B65G 21/22, B65G 35/06, B64F 1/36

(54) **Kurve eines Fördersystems für Behälter insbesondere eine Flughafen-Gepäckförderanlage**

(30) Priorität: 27.02.2003 DE 10308657; 04.04.2003 DE 10315505
(71) Anmelder: SIEMENS AKTIENGESELLSCHAFT, 80333 München (DE)
(72) Erfinder: Brixius, Wolfgang, 91077 Neunkirchen A. Br (DE); Hoene, Albrecht, 93138 Lappersdorf (DE); Gräfer, Dominik, 44265 Dortmund-Wellinghofen (DE)

(57) **Zusammenfassung**

Die Erfindung betrifft eine Kurve eines Fördersystems für Behälter (1), insbesondere eine Flughafen-Gepäckförderanlage, die sich im Kurvenbereich entlang einer gekrümmten Förderbahn bewegen, mit Antriebs- und Führungsmitteln (4, 5) zum Bewegen und Führen der Behälter (1), die dabei mit ihrer Bodenunterseite auf Abstützelementen aufliegen. Um die Relativbewegung zwischen dem Behälter, den zuführenden Gurtbändern und den Rollenpaaren zu verringern, wird vorgeschlagen, dass die Behälter (1) zwei auf der Behälterunterseite ausgebildete und in Transportrichtung verlaufende Längsseiten (14, 15) aufweisen, die spiegelsymmetrisch in einem dem Radius der Kurve entsprechenden Radius derart nach außen oder nach innen gekrümmt sind, dass der größte bzw. kleinste Abstand der Längsseiten (14, 15) im Bereich der Längsseitenmitte liegt, und dass die Antriebs- und Führungsmittel (4, 5) jeweils an mindestens einer der Längsseiten (14, 15) zumindest abschnittsweise kraft- oder formschlüssig anliegen und einen Vortrieb des Behälters (1) bewirken.

## Beschreibung

Die Erfindung betrifft eine Kurve eines Fördersystems für Behälter, insbesondere eine Flughafen-Gepäckförderanlage, gemäß dem Oberbegriff des Anspruchs 1.

Flughafen-Gepäckförderanlagen für Behälter sind bekannt. Dabei werden die Behälter entlang einer Förderbahn bewegt, welche immer auch Kurven aufweisen (s. DE 197 07 321 A1). Zum Bewegen und Führen der Behälter werden diese mittels als Flachgurt ausgebildeten Fördergurten angetrieben, die endlos umlaufen und über Umlenkräder geführt sind. Der Fördergurt kann dabei auch speziell als Zahnriemen ausgebildet sein. Der Fördergurt liegt dabei kraft- oder formschlüssig an zumindest einer Behälterseite an und sorgt so für den erforderlichen Vortrieb des Behälters.

Weiter ist es bekannt, den Behälter mittels zweier Fördergurte eines geraden Förderers der Kurve zuzufördern und diesen am Kurveneingang mit Rollenpaaren zu übernehmen, welche zweckmäßigerweise auf einer Achse zu einem Konus angeordnet sind, um Geschwindigkeitsunterschiede zwischen Außen- und Innenradius der Kurve auszugleichen. Die außenliegenden Rollenpaare und die zuführenden Gurte sind dabei in der Regel in einem Abstand entsprechend der Behälterbreite zueinander angeordnet, wodurch sich größere Geschwindigkeitsunterschiede ergeben, welche zu einer unerwünschten Relativbewegung zwischen dem Behälter, den zuführenden Gurtbändern und den Rollenpaaren ergeben. Zur Unterdrückung der Relativbewegung werden Zwangsführungen an den Behälteraußenseiten als auch mittig liegende Führungsschienen verwendet, in denen am Behälter montierte Führungsrollen laufen können. Die Behälterbeladungen können dabei zu zusätzlichen Querkräften führen.

Die Aufgabe der Erfindung ist es, die oben genannte Relativbewegung zu verringern.

Die Lösung dieser Aufgabe ist durch die im Anspruch 1 angegebenen Merkmale gegeben. Durch die kennzeichnenden Merkmale der Unteransprüche ist die Kurve in vorteilhafter Weise weiter ausgestaltet.

Die Lösung sieht vor, dass die Behälter zwei auf der Behälterunterseite ausgebildete und in Transportrichtung verlaufende Längsseiten aufweisen, die spiegelsymmetrisch in einem dem Radius der Kurve entsprechenden Radius derart nach außen oder nach innen gekrümmt sind, dass der größte bzw. kleinste Abstand der Längsseiten im Bereich der Längsseitenmitte liegt, und dass die Antriebs- und Führungsmittel jeweils an mindestens einer der Längsseiten zumindest abschnittsweise kraft- oder formschlüssig anliegen und einen Vortrieb des Behälters bewirken

Eine effektive Ausbildung des Fördersystems ist gegeben, wenn die Antriebs- und Führungsmittel drehbare entlang der Kurvenlinie angeordnete Rollen umfassen.

Eine gleichmäßige Führung der Behälter ergibt sich, wenn die Rollen der Antriebs- und Führungsmittel beidseitig entlang der Kurvenlinie angeordnet sind und zumindest mittelbar an den Längsseiten abrollen.

Eine Führung mit geringen Geschwindigkeitsunterschieden zwischen Außen- und Innenradius ergibt sich, wenn die Längsseiten die beiden Seiten einer in Transportrichtung verlaufenden nutförmigen Ausnehmung sind, wobei die Längsseiten spiegelsymmetrisch derart nach außen gekrümmt sind, dass der größte Abstand der Längsseiten im Bereich der Längsseitenmitte liegt, und dass die Antriebs- und Führungsmittel in die nutförmige Ausnehmung eingreifen und jeweils an mindestens einer der Längsseiten zumindest abschnittsweise anliegen.

Um die Rollen konstruktiv einfach anzutreiben, wird vorgeschlagen, dass die bezogen auf die Kurve innenliegenden Rollen der Antriebs- und Führungsmittel freidrehbar unmittelbar an den Längsseiten abrollen, während die außenliegenden ein umlaufendes Antriebsband antreiben, dessen jeweils außenliegende Seite an der zugewandten Längsseite kraft- oder formschlüssig anliegt.

Eine gleichmäßige und selbstverstärkende Anlage der Antriebsund Führungsmittel wird erzielt, wenn die außenliegenden Rollen schwenkbar an einem Hebelarm gelagert sind, dessen Schwenkachse parallel zur Achse der außenliegenden Rollen verlaufend zwischen diesen und den innenliegenden Rollen angeordnet ist.

Die Wirksamkeit des Antriebs verbessert sich, wenn zwischen den außenliegenden und den innenliegenden Rollen entlang der Kurvenlinie feststehende Hilfsrollen derart angeordnet sind, dass das Antriebsband im Lastrum wellenförmig an den Hilfsrollen entlang verläuft, wobei die außenliegenden Rollen beim Antreiben des Antriebsbands um die Schwenkachse nach außen gedrückt werden und so den Behälter zwischen den innenliegenden Rollen und der Außenseite des Antriebsbands verspannen.

Eine alternative Ausführung sieht vor, dass die Längsseiten die beiden Seiten eines in Transportrichtung verlaufenden stegförmigen Vorsprungs sind, wobei die Längsseiten spiegelsymmetrisch derart nach innen gekrümmt sind, dass der kleinste Abstand der Längsseiten im Bereich der Längsseitenmitte liegt.

Ein einfacher und sicherer Antrieb ergibt sich wenn die bezogen auf die Kurve innenliegenden Rollen der Antriebs- und Führungsmittel unmittelbar an den Längsseiten abrollen, während die außenliegenden ein umlaufendes Antriebsband antreiben, dessen jeweils außenliegende Seite an der zugewandten Längsseite kraft- oder formschlüssig anliegt, oder umgekehrt.

Um die auftretenden Querkräfte zu verringern, wird vorgeschlagen, dass die Abstützelemente als Kugelrollen oder Gleitflächen ausgebildet sind.

Die Erfindung wird nachfolgend anhand einer Zeichnung näher beschrieben. Es zeigen:
- Fig. 1: Einen Ausschnitt aus einem Fördersystem mit einer aus zwei Kurvenstücken gebildeten Kurve,
- Fig. 2: ein Kurvenstück gemäß Fig. 1 in einer vergrößerten Darstellung,
- Fig. 3: eine schematische Darstellung des Kurvenstücks gemäß Fig. 1 mit durchlaufendem Behälter,
- Fig. 4: eine alternative Ausführung des Kurvenstücks gemäß Fig. 2,
- Fig. 5: eine weitere alternative Ausführung des Kurvenstücks gemäß Fig. 2,
- Fig. 6: eine Darstellung des Kurvenstücks gemäß Fig. 5 mit aufliegendem Behälter und
- Fig. 7: die kinematische Umkehr des Kurvenstücks gemäß Fig. 4.

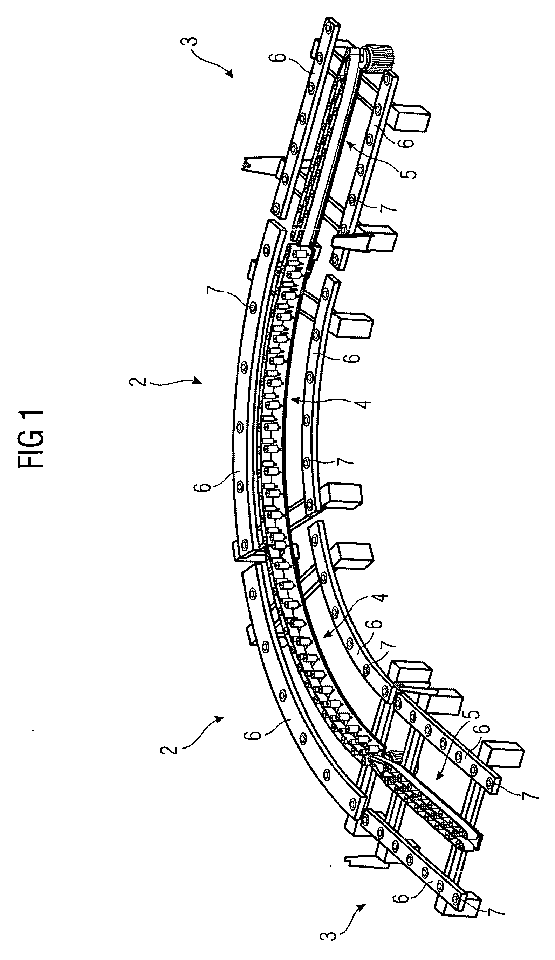

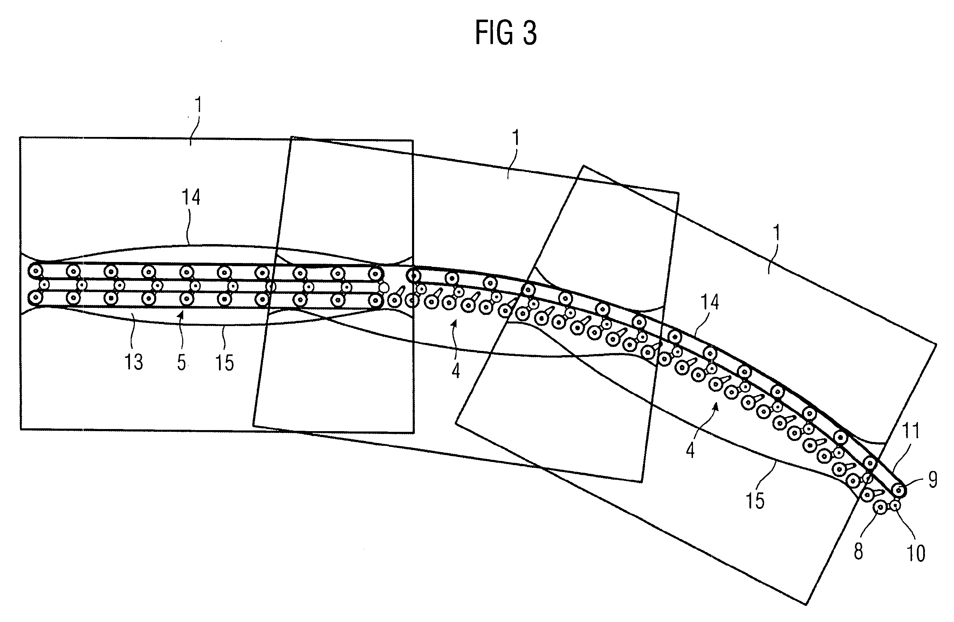

Fig. 1 zeigt einen Ausschnitt aus einem Fördersystem, beispielsweise eine Flughafen-Gepäckförderanlage, mit einer aus zwei Kurvenstücken 2 gebildeten Kurve für Behälter 1 (s. Fig. 3, 4, 6 und 7). Selbstverständlich könnte die Kurve auch einstückig ausgebildet sein. Der Ausschnitt zeigt zwei unmittelbar hintereinander geschaltete Kurvenstücke 2, denen ein gerader Förderer 3 vor- und nachgeschaltet ist. Die beiden Kurvenstücke 2 und die geraden Förderer 3 verfügen jeweils im mittleren Bereich über Antriebs- und Führungsmittel 4, 5. Auf beiden Seiten der Antriebs- und Führungsmittel 4, 5 sind Tragplatten 6 als Tragelemente vorgesehen, wobei sich die Behälter 1 über Kugelrollen 7 als Abstützelemente auf den Tragplatten 6 abstützen, indem die Behälter 1 mit ihrer Unterseite auf den Kugelrollen 6 aufliegen.

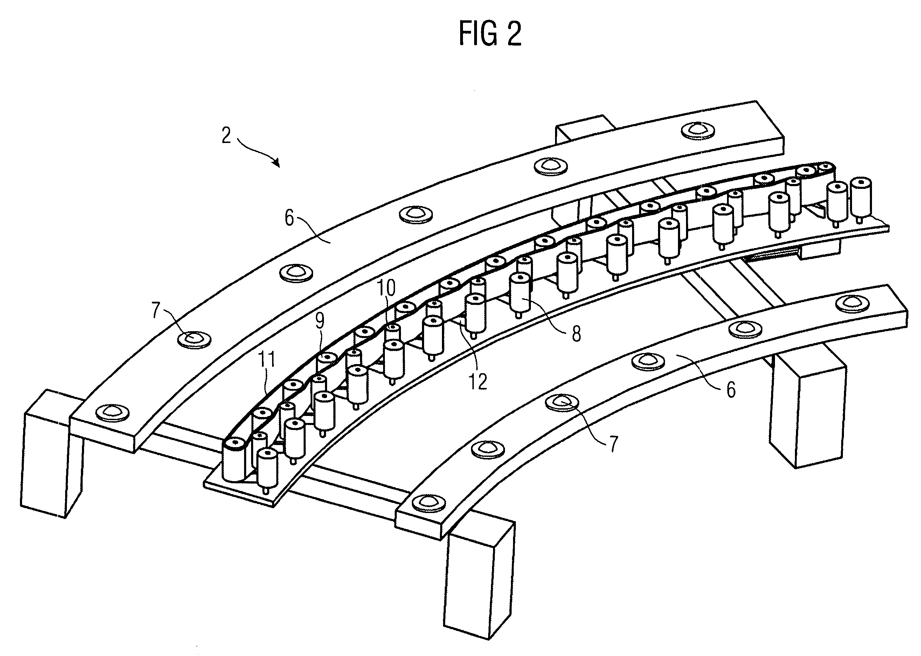

In Fig. 2 ist ein Kurvenstück 2 vergrößert dargestellt. Man erkennt, dass die Antriebs- und Führungsmittel 4 Rollen 8, 9, 10 sowie ein Antriebsband 11 umfassen. Die Rollen 8, 9 verlaufen beidseitig einer gedachten Kurvenlinie, entlang derer sich die Behälter 1 bewegen. Die Rollen 8 sind dabei frei drehbar gelagert, während die Rollen 9 das endlos umlaufende Antriebsband 11 führen und antreiben. In Fig. 2 sind die außenliegenden Rollen 9 außerdem schwenkbar an jeweils einem Hebelarm 12 gelagert, dessen Schwenkachsen parallel zur Drehachse der zugehörigen außenliegenden Rolle 9 verlaufend zwischen diesen und den innenliegenden Rollen 8 angeordnet ist. Außerdem sind in Fig. 2 Hilfsrollen 10 vorgesehen, die hier direkt auf der gedachten Förderbahnlinie liegen, und zwar zwischen den außenliegenden und den innenliegenden Rollen 8, 9. Die Hilfsrollen 11 sind so angeordnet, dass das Antriebsband 11 im Lasttrum wellenförmig an den Hilfsrollen 10 entlang verläuft, so dass die außenliegenden Rollen 9 beim Antreiben des Antriebsbands 11 um die Schwenkachse verschwenken und dabei nach außen gedrückt werden, so dass sie den Behälter 1 zwischen den innenliegenden Rollen 8 und der nach außen weisenden Außenseite des Antriebsbands 11 verspannen.

Dargestellt ist in Fig. 3 ein gerader Förderer 3 und ein nachfolgendes Kurvenstück 2 in einer schematischen Darstellung mit einem zu transportierendem Behälter 1. Die Behälter 1 weisen an ihrer Unterseite eine nutförmige Ausnehmung 13 auf, deren Längsseiten derart spiegelsymmetrisch nach außen gekrümmt sind, dass der größte Abstand der Längsseiten 14, 15 etwa in Längsseitenmitte liegt. Die Antriebs- und Führungsmittel 4, 5 greifen in die Ausnehmung 13 ein und liegen jeweils an beiden Längsseiten 14, 15 zumindest abschnittsweise kraftschlüssig an. Sie bewirken so einen geführten Vortrieb der Behälter 1. Die Längsseiten 14, 15 verlaufen korrespondierend zu den Rollen 8, 9 und dem Antriebsband 11 senkrecht zur Bodenunterseite des Behälters 1. In Fig. 3 ist der Behälter 1 zu drei verschiedenen Zeitpunkten seines Durchlaufs durch die Kurve dargestellt.

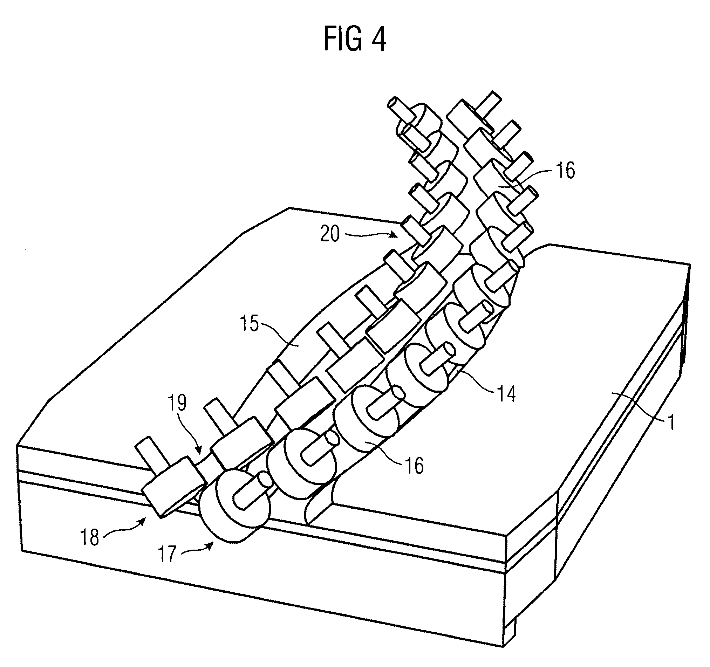

Fig. 4 entnimmt man eine alternative Ausführung des Kurvenförderers 2 für einen Behälter 1, dessen Längsseiten 14, 15 schräg zueinander angeordnet sind. Und zwar so, dass sich eine nach außen öffnende nutförmige Ausnehmung 13 ergibt. Anstelle der Rollen 8, 9 sind jetzt Kegelrollen 16 vorgesehen, die als zwei parallel verlaufende Rollenbahnen 17, 18 ausgebildet sind. Wie Fig. 4 zeigt liegen im Kurvenbereich beide Rollenbahnen 17, 18 an den Längsseiten 14, 15 an, die Rollenbahn 17 nahezu vollständig an der Längsseite 14, die Rollenbahn 18 nur an den kurzen Längsseitenabschnitten 19, 20.

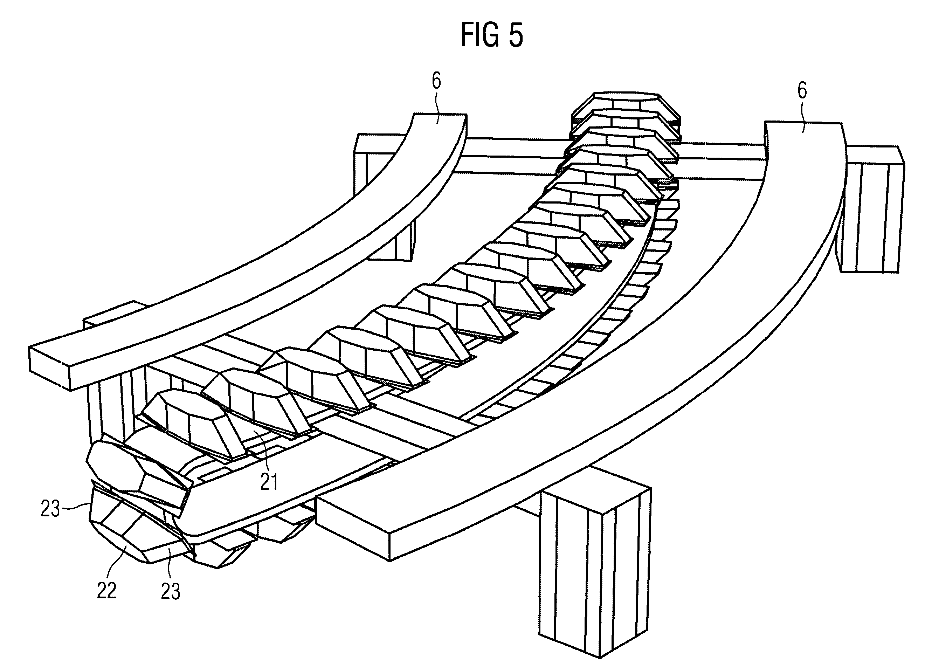

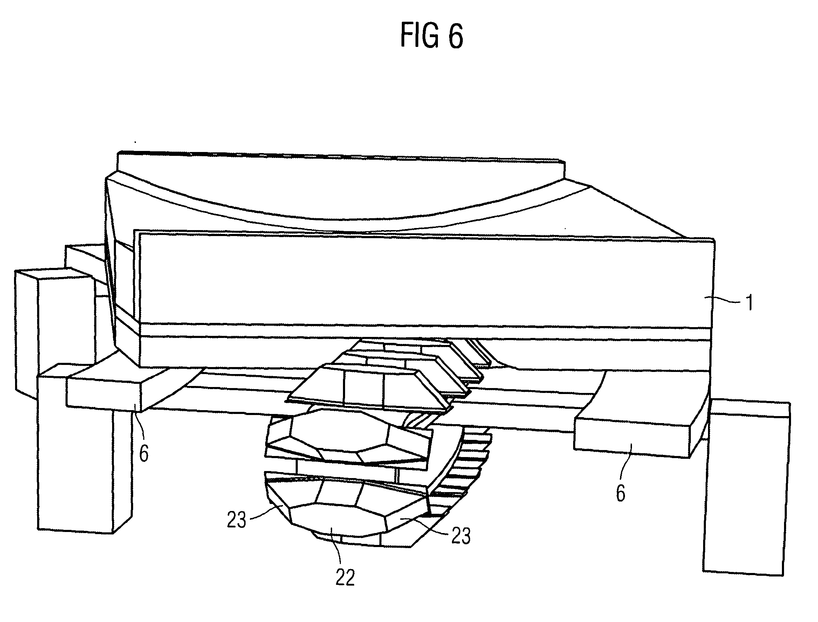

Eine weiter Alternative zu den Kegelrollen 16 ist in Fig. 5 und Fig. 6 dargestellt, die eine Scharnierbandkette 21 mit parallel zueinander angeordneten Prismen 22 (oder Trapezen) zeigt. Die Prismen 22 greifen wie in Fig. 10 dargestellt in die Ausnehmung 13 ein, wobei sie den Behälter 1 unter Bildung eines Reibschlusses mit den schrägen Ausnehmungslängsseiten 14, 15 führen und vortreiben, die dabei mit ihren nach außen weisenden Prismenseiten 23 an den Ausnehmungslängsseiten 14, 15 anliegen.

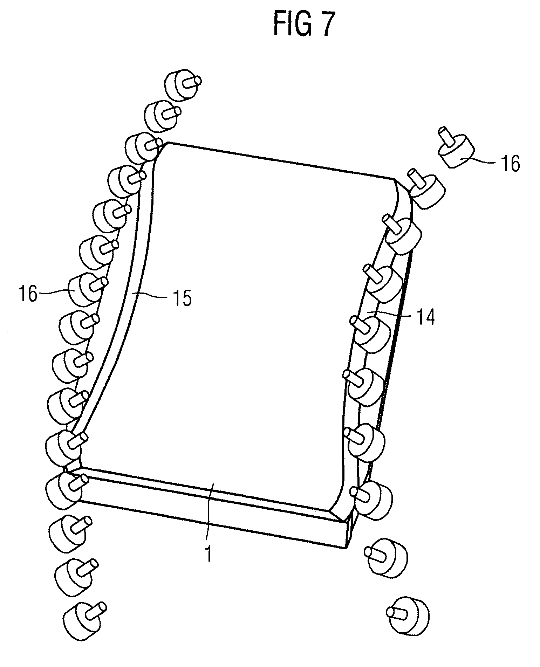

Fig. 7 zeigt noch die kinematische Umkehr von Fig. 4. Die geneigten Längsseiten 14, 15 zur Führung und zum Antrieb des Behälters 1 sind an den Außenseiten beidseitig des Behälters 1 symmetrisch zueinander angeordnet. Abhängig davon, welche der Kegelrollen 16 bei Kurvenfahrt den Antrieb übernehmen sind die gekrümmten Längsseiten 14, 15 konvex oder konkav geformt, so dass sich die Kegelrollen 16 jeweils in der Innen- oder Außenseite der Kurve an den Behälter 1 anlegen.

## Patentansprüche

1. Kurve eines Fördersystems für Behälter (1), insbesondere eine Flughafen-Gepäckförderanlage,
die sich im Kurvenbereich entlang einer gekrümmten Förderbahn bewegen,
mit Antriebs- und Führungsmitteln (4, 5) zum Bewegen und Führen der Behälter (1), die dabei mit ihrer Bodenunterseite auf Abstützelementen aufliegen,
**dadurch gekennzeichnet,**
**dass** die Behälter (1) zwei auf der Behälterunterseite ausgebildete und in Transportrichtung verlaufende Längsseiten (14, 15) aufweisen, die spiegelsymmetrisch in einem dem Radius der Kurve entsprechenden Radius derart nach außen oder nach innen gekrümmt sind, dass der größte bzw. kleinste Abstand der Längsseiten (14, 15) im Bereich der Längsseitenmitte liegt, und
**dass** die Antriebs- und Führungsmittel (4, 5) jeweils an mindestens einer der Längsseiten (14, 15) zumindest abschnittsweise kraft- oder formschlüssig anliegen und einen Vortrieb des Behälters (1) bewirken.

2. Kurve nach Anspruch 1,
**dadurch gekennzeichnet,**
**dass** die Antriebs- und Führungsmittel (4, 5) drehbare entlang der Kurvenlinie angeordnete Rollen (8, 9) umfassen.

3. Kurve nach Anspruch 2 oder 3,
**dadurch gekennzeichnet,**
**dass** die Rollen (8, 9) der Antriebs- und Führungsmittel (4, 5) beidseitig entlang der Kurvenlinie angeordnet sind und zumindest abschnittsweise mittelbar an den Längsseiten (14, 15) abrollen.

4. Kurve nach einem der Ansprüche 1 bis 3,
**dadurch gekennzeichnet,**
**dass** die Längsseiten (14, 15) die beiden Seiten einer in Transportrichtung verlaufenden nutförmigen Ausnehmung (13) sind, wobei die Längsseiten (14, 15) spiegelsymmetrisch derart nach außen gekrümmt sind, dass der größte Abstand der Längsseiten (14, 15) im Bereich der Längsseitenmitte liegt, und dass die Antriebs- und Führungsmittel (4, 5) in die nutförmige Ausnehmung (13) eingreifen und jeweils an den Längsseiten (14, 15) zumindest abschnittsweise anliegen.

5. Kurve nach einem der Ansprüche 2 bis 4,
**dadurch gekennzeichnet,**
**dass** die bezogen auf die Kurve innenliegenden Rollen (8) der Antriebs- und Führungsmittel (4, 5) freidrehbar unmittelbar an den Längsseiten (14, 15) abrollen, während die außenliegenden (9) ein umlaufendes Antriebsband (11) antreiben, dessen jeweils außenliegende Seite an der zugewandten Längsseite (14) kraft- oder formschlüssig anliegt.

6. Kurve nach Anspruch 5,
**dadurch gekennzeichnet,**
**dass** die außenliegenden Rollen (9) schwenkbar an einem Hebelarm (12) gelagert sind, dessen Schwenkachse parallel zur Achse der außenliegenden Rollen (9) verlaufend zwischen diesen und den innenliegenden Rollen (8) angeordnet ist.

7. Kurve nach einem der Ansprüche 2 bis 6,
**dadurch gekennzeichnet,**
**dass** zwischen den außenliegenden und den innenliegenden Rollen (8, 9) entlang der Kurvenlinie feststehende Hilfsrollen (10) derart angeordnet sind, dass das Antriebsband (11) im Lastrum wellenförmig an den Hilfsrollen (10) entlang verläuft, wobei die außenliegenden Rollen (9) beim Antreiben des Antriebsbands (11) um die Schwenkachse nach außen gedrückt werden und so den Behälter (1) zwischen den innenliegenden Rollen (8) und der Außenseite des Antriebsbands (11) verspannen.

8. Kurve nach Anspruch 1,
**dadurch gekennzeichnet,**
**dass** die Längsseiten (14, 15) die beiden Seiten eines in Transportrichtung verlaufenden stegförmigen Vorsprungs sind, wobei die Längsseiten (14, 15) spiegelsymmetrisch derart nach innen gekrümmt sind, dass der kleinste Abstand der Längsseiten (14, 15) im Bereich der Längsseitenmitte liegt.

9. Kurve nach einem der Ansprüche 2 bis 8,
**dadurch gekennzeichnet,**
**dass** die bezogen auf die Kurve innenliegenden Rollen (8) der Antriebs- und Führungsmittel (4, 5) unmittelbar an den Längsseiten (14, 15) abrollen, während die außenliegenden ein umlaufendes Antriebsband (11) antreiben, dessen jeweils außenliegende Seite an der zugewandten Längsseite (14) kraftoder formschlüssig anliegt, oder umgekehrt.

10. Kurve nach einem der Ansprüche 1 bis 9,
**dadurch gekennzeichnet,**
**dass** die Abstützelemente als Kugelrollen (7) oder Gleitflächen ausgebildet sind.
